# EUROPEAN PATENT APPLICATION

(11) **EP 1 719 440 A1**
(43) Date of publication of application: **08.11.2006**
(21) Application number: 05425305.9
(22) Date of filing: 06.05.2005
(51) Int. Cl.: A47J 31/40

(54) **Unit, piston and gasket for infusion machine**

(71) Applicant: RANCILIO MACCHINE PER CAFFE' S.p.A., I-20010 Villastanza di Parabiago (Milano) (IT)
(72) Inventor: Carbonini, Carlo c/o Rancilio Macchine per Caffe', 20010 Villastanza di Parabiago (MI) (IT); Bianchini, Carlo c/o Rancilio Macchine per Caffe', 20010 Villastanza di Parabiago (MI) (IT)
(74) Representative: Robba, Pierpaolo

(57) **Abstract**

The present invention relates to an infusion unit (10), a piston or head (14,15), a gasket (43,53) for infusion machine and a method for assembling gaskets (43,53), on pistons (14,15) of such type of machines. The infusion unit (10) comprises an infusion chamber (12) and at least one piston (14,15) arranged to slide in one cavity (21) of the chamber (12). The piston (14,15) comprises at least one sealing gasket (43,53) made of metallic material and shaped so as to generate a sealing action metal to metal between said gasket (43,53) and said cavity (21).

## Description

### Technical field

The present invention relates, in general terms, to infusion units or groups, heads (pistons or piston heads) and sealing devices (gaskets) to be used in the field of infusion machines.
The present invention relates also to a method for assembling the gaskets on pistons of infusion units.
In particular, the present invention relates to infusion units, pistons and gaskets to be used in superautomatic type machines adapted for the preparation of espresso coffee.

### Background art

The use of devices like gaskets, pistons and infusion units is known in the field of the superautomatic infusion machines.
It is also known that such devices, in particular gaskets, are, in general, subject to very high wear in such types of machines.
As a matter of fact, by taking as reference a typical infusion cycle of a superautomatic machine having an infusion unit for the preparation of coffee, such a cycle comprises, for example, the following steps:
- selection by a user of a drink, for example coffee, by pressure of a key;
- grinding the coffee beans by means of a suitable device associated to the machine and generation of a determined amount of ground coffee to be used for the infusion;
- filling a cavity (chamber or infusion chamber) or a partially closed cylinder comprised in the infusion unit;
- closing the cylinder by means of one or two pistons adapted to move in the cylinder, tamping (compressing) the ground coffee and supplying, for a determined time, pressurised steam (to approximately 90° C) on the ground coffee, through, for example, filters located on the piston heads and conduits inside the pistons;
- releasing the mobile piston or pistons, opening the cylinder and ejecting the used grounds, at this point exhausted, either by spontaneous fall or through the movement of a piston or other mechanical devices.
Taking as reference the cycle described above, a first problem of the known art lies in that the pistons releasing step and the used grounds ejection step, in general, does not ensure a perfect cleaning of the cylinder, so that some particles of the used ground coffee remain adherent, for example, to the cylinder and to the filters on the piston heads.
Moreover, during the grinding and chamber filling steps, it can happen, in particular, that ground coffee settles everywhere on the infusion unit and, in particular, on the cylinder. By repeating the infusion cycles, the result is that the steps of closing the cylinder and tamping the ground coffee, steps that are considered the most critical for the machine and for a perfect result of coffee making, involve that the several gaskets are exposed to the contamination of dry or wet ground coffee that tends to wear out the gaskets, in particular, because of the movement of the piston or pistons.

In synthesis, it is self evident that, being the typical duration of the infusion cycle of 15-20 seconds and being the cycle repeated on average even ten-thousands times over a certain number of months, the wear of some devices and, in particular, of the gaskets, is very high.

Unfortunately, the wear of inner parts, such as gaskets of infusion units, is not noticeable from the outside of the machines and, therefore, for such machines, in general, a continuous maintenance is required, by substitution, for example, of the gaskets every 30.000-50.000 espresso or at least every six months.

In order to limit the above-mentioned wear problems that involve reduction of operating times and increased costs of said machines, several inventions have been employed to extend the maintenance intervals and, in particular, the substitution interval of the gaskets.

For example, EP publication N. 1260166, filed in the name of the Applicant, discloses an infusion unit in which two pistons having each a split head are provided; each split head comprises a respective gasket adapted to perform the sealing function only in the steps of closing the cylinder and tamping the ground coffee.
In particular, each gasket of each piston is located between the two split heads that are adapted to slide one inside the other.
It follows, according to said background art, that the gaskets are adapted to remain inside the profile of the piston in all steps in which sealing is not required, and to emerge from the profile and exercise the sealing function for the infusion chamber in the cylinder closing step only.
The Applicant believes that even such a known solution does not solve in a fmal way the wear problem of the gaskets in the infusion machines, as for example in superautomatic machines, as it introduces some elements of complexity (split head pistons, gaskets that radially stretch), which, too, are subject to wear and tear and breakdown risk.

### Disclosure of the invention

Object of present invention is an infusion group, head (piston or piston head) and gasket for infusion machine arranged to overcome the wear problems of the background art, as illustrated above.

Further object of present invention is a method for mounting the gaskets, according to the invention, on pistons for infusion units.

In particular, object of the present invention is a long life gasket for pistons of superautomatic infusion machines that, at worst, has a life equal to the life of the machine and that is such to guarantee an extended efficiency of the machine and, at the same time, maintenance cost reductions.

Such an object is achieved by the unit, head and gasket for infusion machine having the features set forth in the claims that follow as well as by the method of mounting gaskets, as claimed.

Claims are an integral part of the teaching of the present invention.

According to a preferred embodiment the object is achieved by an infusion unit having at least one piston with at least one gasket in metallic material.

According to a further feature the piston gasket or gaskets are made of a material chosen from the group comprising:
- perlitic iron having lamellar structure;
- C75 steel;
- harmonic steel;
- CrNiV2A steel;
- bronze.

According to still a further feature of the present invention, the gasket or gaskets constantly emerge, in all steps of the infusion cycle, from the profile of the piston ensuring therefore a continuous cleaning of the cylinder.

### Brief description of drawings

These and further features and advantages of the present invention will appear more clearly from the following detailed description of a preferred embodiments, provided by way of non limiting examples with reference to the attached figures, wherein components designated by same or similar reference numerals indicate components having same or similar functionality and construction and wherein:
Fig. 1 shows an infusion unit with pistons having gaskets according to the invention;
Fig. 2 shows a cavity having a piston according to the invention ;
Fig. 3a-3h shows examples of joints (connections) for mounting the gaskets according to the invention.

### Best mode of carrying out the invention

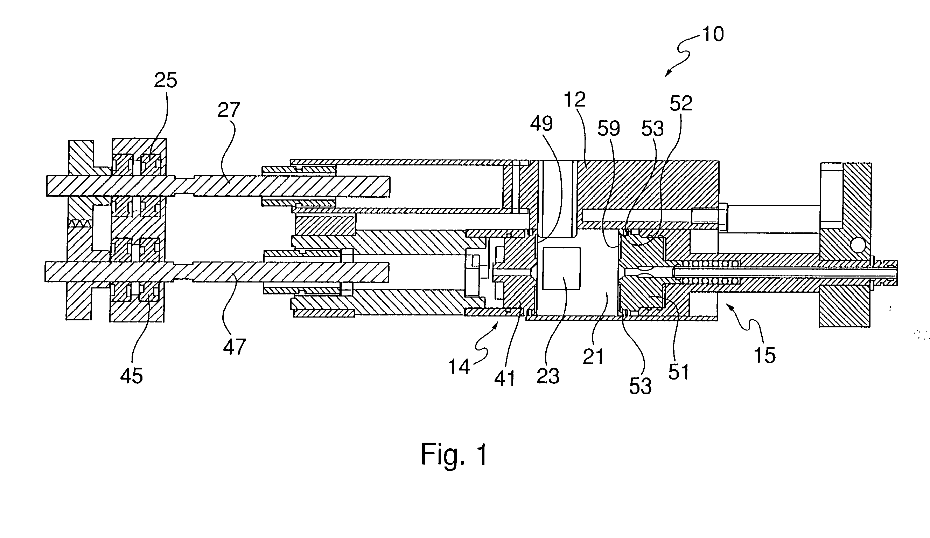

With reference to Fig. 1 there is provided a unit for making infused beverages or infusion unit 10 having an architecture of known type, for instance a horizontal type architecture, and comprising devices that, according to the invention, are adapted to obtain, by means of infusion cycles, a determined infusion from one determined infusion powder.
Obviously, present invention can be applied to infusion units having architectures different from that represented; as a mater of fact, the present invention may be applied to architectures in which there is provided the presence of an infusion chamber and of at least one piston arranged to close, for instance, the infusion chamber or parts of the chamber by means of said at least one piston.

The infusion unit (unit) 10 comprises, for instance, one mobile infusion chamber (chamber) 12, of known type, sliding on slide bars, a first piston 14, for instance of mobile type, and a second piston 15, for instance of fixed type, opposed, inside the infusion unit 10, to the first piston (mobile piston) 14.

The mobile chamber 12, according to the exemplary embodiment described here, is apt to move (slide), in a known way, during the infusion cycle, as it will be disclosed later on in detail, by means of a motor 25 and a threaded shaft 27, associated to the chamber 12. The mobile chamber 12, of known type, comprises a cavity 21, preferably having an inner surface of cylindrical shape, and conduits 23, of known type, for the introduction of the infusion powder, for instance ground coffee and/or powder of other substances, from which the desired infusion can be obtained, in a known way.
Both the cavity (cylinder) 21 and the conduits 23 are arranged to slide together with the mobile chamber 12 during the infusion cycle.
According to the preferred embodiment, the cylinder 21 is made, in a known way, of metallic material, for instance of brass, of stainless steel or of aluminium; such materials, might be coated or treated, in known way, in order to confer hardness and smoothness to the contact surface of the cylinder 21.

The mobile piston 14 is apt to move (slide), in a known way, inside the cavity 21 by means of a motor 45 and of a threaded shaft 47 associated to the mobile piston 14; during the movement the piston 14 is arranged to tamp (compress), in particular, the infusion powder.
The mobile piston 14 has an external profile having a smaller diameter than the diameter of the inner surface of the cylinder 21 and is made, for instance, of metallic material substantially equal to that used for making the cylinder.
The mobile piston 14, comprises, for instance, a head 41 having a discoidal filter 49, of known type, suitable to allow flowing, in known way, of steam (hot water) through conduits located inside the piston, not illustrated in figure.

The head 41 of the mobile piston 14 further comprises, according to a preferred embodiment, annular (ring-shaped) slots 42, for instance two slots, adapted to accommodate respective sealing gaskets (gaskets) 43.
Obviously, in other embodiments, the number of slots 42 can be lesser or greater than two.

The slots 42 are, for instance, of rectangular cross-section, but other types of cross-sections may be provided.

The second piston (fixed piston) 15 is apt to move (slide), in known way, inside the cavity 21 as a result of the movement of the cavity 21.
The fixed piston 15, as it will be disclosed later on in detail, is arranged to cooperate for tamping the infusion powder and for facilitating the discharge or ejection of the used infusion powder (exhausted powder).
The fixed piston 15 has an external profile having a smaller diameter than the diameter of the inner surface of the cylinder 21 and is made, for instance, of metallic material substantially equal to that used for making the mobile piston.
The fixed piston 15 comprises, for instance, a head 51 having a discoidal filter 59, of known type, arranged to allow flowing, in a known way, of steam (hot water) through conduits located inside the piston, not illustrated in figure.

The head 51 of the fixed piston 15 comprises, according to a preferred embodiment, annular slots 52 in number and shape substantially equivalent to those already described with reference to the mobile piston 14, apt to accommodate respective sealing gaskets (gaskets) 53, substantially equivalent to those provided for the mobile piston 14.

In other embodiments the first piston 14 may comprise, for instance, a single sealing gasket 43 and the second piston 15 may comprise, for instance, in addition to the sealing gasket 53, a dirt scraping gasket, of known type, for instance made of Teflon or graphite, located in a position close to the extremity of the head 51 of the fixed piston 15 and apt to scrape off, in a known way, the exhausted powder from the cylinder 21.

In further embodiments, the first piston 14, too, may comprise in addition to the sealing gasket or gaskets 43 a dirt scraping gasket having features equivalent to the one described above for the fixed piston 15 and in a position close to the extremity of the head 41 of the piston 14.

The sealing gaskets, 43 and/or 53, preferably equivalent between them, are fitted into the respective slots, 42 and/or 52, and are configured for constantly or permanently protruding from the profile of the pistons, 14 and/or 15.

Hereafter, in the course of the description, for simplicity, reference will be made only to the gasket or gaskets of the mobile piston 14, but, as it can be easily understandable to a skilled in the art, the same description elements are applicable to the sealing gasket or gaskets of the fixed piston 15.

The sealing gasket 43, in the preferred embodiment, is made of metallic material, for instance of a metallic alloy having high mechanical performances and chosen in the group comprising:
- perlitic iron having lamellar structure;
- C75 steel;
- harmonic steel;
- CrNiV2A steel;
- bronze.

Obviously, in other embodiments, also other metallic alloys can be chosen for making the gaskets, provided that they have features, as regards the mechanical performances, compatible with those of the materials suggested above.

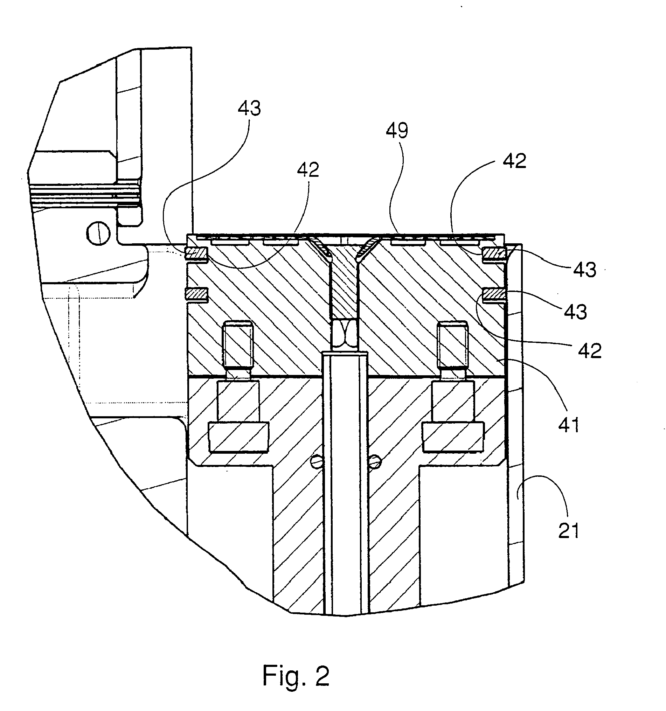

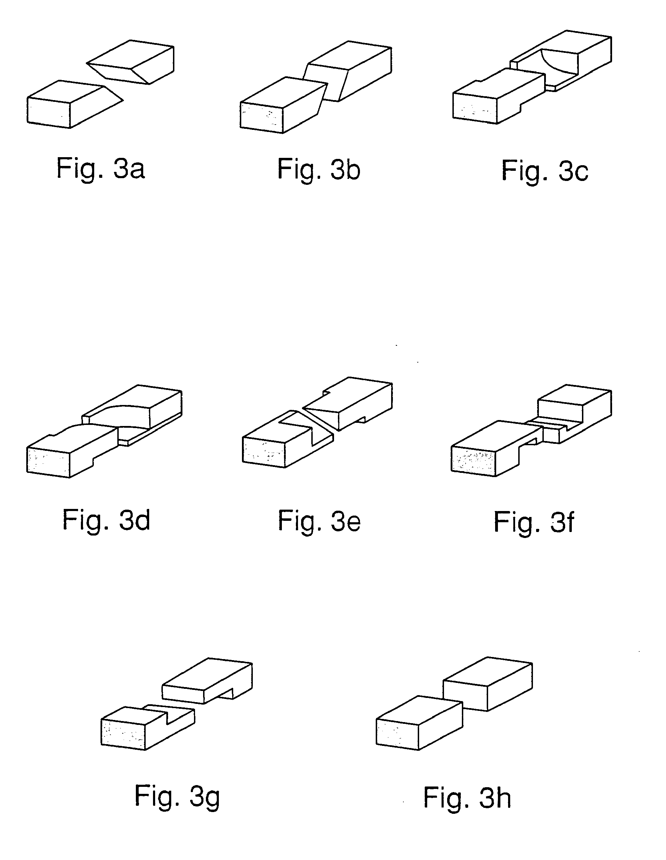

The gasket 43 (Fig.2 and Fig.3) has, for instance, annular shape and is obtained, for instance, from strips made of the metallic material as suggested above and cut to size in such a way as to generate segments to be mounted in the slots located on the pistons.
The segment extremities have, for instance, connection profiles (shapes) arranged to allow an easy realisation of the gasket.
For instance, the segment extremities can be of flared type (Fig.3a-3b), of circular flared type (Fig.3c-3e), of C-shaped connection type (Fig.3f), of L-shaped connection type (Fig.3g), or of flat type (Fig.3h) and are apt to be joined or fixed in such a way as to realise the gasket assembled on the piston.

The gasket 43 has substantially a rectangular cross-section.

Each sealing gasket, 43 or 53, is adapted to realise or to generate a sealing action, metal-to-metal, between gasket and cylinder, so as to prevent the flow of water (steam) and/or infusion powder and/or exhausted powder between piston, 14 or 15, and cylinder 21.
Moreover, each sealing gasket, 43 and/or 53, being permanently in contact with the cylinder 21, is apt to realise a dirt scraping function sufficient to keep the cylinder clean and to allow, in some embodiments, the elimination of the dirt scraping gaskets.

The operation of the infusion unit 10 as disclosed here is the following.

By taking as reference an infusion cycle and by ignoring a possible grinding step, for instance, for grinding the coffee beans, in a first step (loading step), which can be assumed representative of a rest status or position of the infusion unit 10 and which is shown in Fig.1, the conduit 23 has free access to the cylinder 21 which, in the depicted position, is closed by the mobile 14 and fixed piston 15 in opposed positions.
During such first step, the infusion powder is introduced in the cylinder 21, in a known way, in an amount corresponding to that required for obtaining a determined infusion.

Once the loading step has been completed, in a second step (tamping and supply or infusion step), the mobile piston 14, activated by the motor 45 and by the shaft 47, moves, in known way, toward the fixed piston 15, in such a way to tamp (compress) the infusion powder (powder); the mobile chamber 12, during such step, activated by the motor 25 and by the shaft 27, moves in opposite direction with respect to the mobile piston 14.
During such second step, there is relative motion between the mobile piston 14 and the cylinder 21, and therefore the sealing gasket 43, being permanently in contact with the inner surface of the cylinder 21, prevents the powder from flowing between the piston 14 and the cylinder 21.
During such second step, similarly, the fixed piston 15, having the gasket 53 in contact with the inner surface of the cylinder 21, guarantees, as the mobile piston 14 approaches, the sealing of the cylinder 21 and prevents that the powder flows between the fixed piston 15 and the cylinder 21.
Moreover, as the head 41 of the mobile piston 14 approaches to the head 51 of the fixed piston 15, the powder is tamped until it reaches a determined tamping (compression) level, as expected, for instance, for obtaining the determined infusion.
Once this tamping level has been attained, the steam (hot water) is run, for instance in known way, in the inner conduits of the mobile piston 14 in such a way that the infusion may run through the inner conduits of the fixed piston 15 for obtaining the infusion supply.

After having completed the tamping and infusion step, in a third step (release and ejection step), the mobile piston 14, activated by the motor 45 and by the shaft 47, moves in opposite direction of the fixed piston 15 and, at the same time, the mobile chamber 12, activated by the motor 25 and by the shaft 27, moves toward the fixed piston 15.
During such third step, there is a relative motion between the mobile piston 14 and the cylinder 21, and therefore the sealing gasket 43, being permanently in contact with the inner surface of the cylinder, prevents the exhausted powder and the water, which might be present as a result of the infusion, from flowing between the piston 14 and the cylinder 21.
Moreover, during such third step, the fixed piston 15, thanks to the relative motion between the cylinder 21 and the fixed piston 15, is adapted not only to induce, in a known way, the ejection of the exhausted powder, but also, being the gasket 53 in contact with the inner surface of cylinder 21, to exercise through the gasket 53 a dirt scraping function inside the cylinder so as to maintain the cylinder clean from the exhausted powder and the water.
Once the third step has been completed, the mobile chamber 12 moves in opposite direction with respect to the fixed piston 15 and the mobile piston 14 moves toward the fixed piston so as to reach the initial position corresponding to the loading step.

The infusion unit as disclosed, as well as the possible different architectures, thanks to the fact of comprising at least one piston having a sealing gasket made of metallic material, is adapted to guarantee a more than optimal resistance to the wear, by even ensuring a longer life than it would be possible with the currently used gaskets made of rubbery material (as for instance Nitrile or Ethylene rubbers).

The life of the gaskets made of metallic material, is reasonably comparable to the life of the coffee machine.

The effectiveness and the efficiency of the gaskets is not affected by performance decays due to the exposure to heat, humidity, vegetable residuals released from the ground coffee.

The manufacturing of the piston head is very simple since, by taking as reference, for example, the cited known art, the head, according to the invention, is comprised of a single part and the composition of more than one part for the head manufacturing is no longer required.
Moreover, the piston and piston head motion inside the infusion unit is more simple and therefore not subject, according to the preferred embodiment, to possible breakdowns due to parts in motion comprised in the piston.

Obvious changes and variations are possible to the above disclosure, as regards dimensions, shapes, materials, components, as well as details of the described construction and operation method without departing from the scope of the invention as defined by the claims that follow.

## Claims

1. Infusion unit for infusion machine comprising
- at least one infusion chamber (12) having at least one cavity (21) made of metallic material configured for receiving an infusion powder,
- at least one first piston (14, 15) having at least one gasket (43, 53) adapted to have a relative motion with respect to said cavity (21) at least for tamping said infusion powder,
**characterised in that**
- said at least one gasket (43, 53) of said at least one first piston (14, 15) is made of metallic material and is shaped so as to generate a sealing action metal-to-metal between said gasket (43, 53) and said cavity (21) at least for tamping said infusion powder.

2. Infusion unit according to claim 1 **characterised in that** said metallic material of said gasket (43) is chosen from the group comprising:
- perlitic iron having lamellar structure;
- C75 steel;
- harmonic steel;
- CrNiV2A steel;
- bronze.

3. Infusion unit according to claim 1 or 2, **characterised in that**
- said at least one first piston (14,15) comprises
- at least one gasket made of Teflon or graphite adapted to operate as a dirt scraping gasket in said cavity.

4. Infusion unit according to any one of claims 1, 2 or 3 **characterised in that** it comprises
- a second piston (15) located opposite to said first piston (14) and having at least one gasket (53) made of metallic material and shaped so as to develop a sealing action metal-to-metal between said gasket (53) and said cavity (21) at least for tamping said infusion powder.

5. Infusion unit according to claim 4 **characterised in that**
- said second piston (15) comprises
- at least one gasket made of Teflon or graphite adapted to operate as a dirt scraping gasket in said cavity.

6. Piston or head for infusion units (10), adapted to cooperate with a cavity (21) made of metallic material and apt to receive an infusion powder to be tamped, comprising
- at least one slot (42, 52) adapted to accommodate a gasket (43, 53),
**characterised in that**
- said gasket (43, 53) is made of metallic material and is shaped so as to generate a sealing action metal to metal between said gasket (43, 53) and said cavity (21) at least for tamping said infusion powder.

7. Piston according to claim 6 **characterised in that**
- said metallic material of said gasket (43) is chosen from the group comprising:
- perlitic iron having lamellar structure;
- C75 steel;
- harmonic steel;
- CrNiV2A steel;
- bronze.

8. Piston according to claim 6 or 7 **characterised in that** it comprises
- at least one gasket made of Teflon or graphite adapted to operate as a dirt scraping gasket in said cavity.

9. Gasket for a piston (14, 15) to be used in infusion units (10), in which said piston (14, 15) comprises at least one slot (42, 52) adapted to accommodate said gasket (43, 53),
**characterised in that**
- said gasket (43 dictates, 53) is made of metallic material and is shaped so as to generate a sealing action metal to metal on metallic cavities (21) of said infusion units (10).

10. Gasket according to claim 9 **characterised in that** said metallic material is chosen from the group comprising:
- perlitic iron having lamellar structure;
- C75 steel;
- harmonic steel;
- CrNiV2A steel;
- bronze.

11. Gasket according to claim 9 or 10 **characterised by** having a substantially rectangular cross-section.

12. Method for assembling at least one gasket (43, 53) on at least one piston (14, 15) to be used in infusion units (10), in which said piston (14, 15) comprises at least one slot (42, 52) for accommodating said gasket (43, 53), **characterised by** the steps of
- realising at least one strip of metallic material;
- cutting gasket segments of a predetermined length so as to realise segments having a first and a second extremity;
- accommodating at least one segment in said at least one slot (42, 52);
- joining or fixing said first and a second extremity so as to realise said at least one gasket (43,53).

13. Method according to claim 12 **characterised in that** said step of realising at least one strip of metallic material comprises the step of generating at least one strip of a material chosen from the group comprising:
- perlitic iron having lamellar structure;
- C75 steel;
- harmonic steel;
- CrNiV2A steel;
- bronze.

14. Method according to claim 12 or 13 **characterised in that** said step of cutting gasket segments
comprises the step of
- applying to said first and second extremity connection profiles chosen from the group comprising shapes of:
- flared type (Fig.3a-3b),
- circular flared type (Fig.3c-3e),
- C- or L-shaped connection type (Fig.3f),
- flat type (Fig.3h).
